(19) Europäisches Patentamt

**European Patent Office**

Office européen des brevets

(11) Numéro de publication: **0 166 658**
**B1**

(12) **FASCICULE DE BREVET EUROPEEN**

(45) Date de publication du fascicule du brevet:
**30.03.88**

(21) Numéro de dépôt: **85401229.1**

(22) Date de dépôt: **20.06.85**

(51) Int. Cl.⁴: **F 16 H 57/04,** F 16 N 7/28

(54) **Dispositif de lubrification d'un train d'engrenages.**

(30) Priorité: **27.06.84 FR 8410143**
**10.04.85 FR 8505377**

(43) Date de publication de la demande:
**02.01.86 Bulletin 86/1**

(45) Mention de la délivrance du brevet:
**30.03.88 Bulletin 88/13**

(84) Etats contractants désignés:
**DE GB IT SE**

(56) Documents cités:
**WO - A - 82/01232**
**DE - B - 1 801 917**
**DE - C - 612 984**
**GB - A - 681 298**
**US - A - 1 893 640**
**US - A - 2 980 209**
**US - A - 3 529 698**

(73) Titulaire: **BENDIX France, 126, rue de Stalingrad,**
**F-93700 Drancy (FR)**

(72) Inventeur: **Courbot, Pierre, 1 bis, rue d'Hérivaux,**
**F-95400 Villiers-le-Bel (FR)**
Inventeur: **Levrai, Roland, 9 bis, Avenue Monmousseau,**
**F-93240 Stains (FR)**
Inventeur: **Picot, Pascal, 1, Place Jean-Jaurès,**
**F-94380 Bonneuil-sur-Marne (FR)**

(74) Mandataire: **Le Moenner, Gabriel et al, Division**
**Technique Service Brevets Bendix Europe 126, rue de**
**Stalingrad, F-93700 Drancy (FR)**

## Description

La présente invention concerne un dispositif de lubrification d'un train d'engrenages disposés dans une chambre d'un carter dont la partie inférieure forme réceptacle d'accumulation pour un lubrifiant liquide du train d'engrenages dans lequel baigne normalement une partie inférieure d'un des engrenages.

Un tel dispositif de lubrification est décrit dans le document US-A-1 893 640.

On sait que, notamment dans les transmissions de véhicules automobiles telle que celle décrite dans le document US-A-1 893 640, ou dans les réducteurs, les engrenages coopérant sont lubrifiés, en fonctionnement, par barbotage de la partie inférieure d'un des engrenages dans le fond formant réceptacle d'accumulation du lubrifiant du carter, la rotation des engrenages provoquant un entraînement d'une partie du lubrifiant vers le ou les autres engrenages coopérant avec l'engrenage barboteur. Au repos, le lubrifiant ainsi dispersé s'écoule par gravité vers le réceptacle d'accumulation. Pour les engrenages tournant à grande vitesse, compte tenu des problèmes de pertes par frottement et d'échauffement du lubrifiant, un compromis doit être adopté concernant la quantité du lubrifiant enfermée dans la chambre du carter d'engrenage pour que le niveau du lubrifiant dans la base de la chambre soit, en fonctionnement, le plus faible possible mais soit suffisant, au repos, pour assurer, par la suite, une lubrification convenable des engrenages. Un tel compromis est extrêmement difficile à réaliser dans la pratique, la quantité de lubrifiant étant généralement déterminée largement en excès pour des raisons de sécurité.

La présente invention a pour objet de proposer un dispositif de lubrification d'un train d'engrenages obviant à ces inconvénients et permettant, dans un agencement simple, de faibles coûts de fabrication et d'entretien aisé, d'assurer, en fonctionnement du train d'engrenages, un niveau extrêmement réduit mais suffisant du lubrifiant dans la base de la chambre avec un refroidissement efficace du lubrifiant soustrait au réceptacle, tout en garantissant, au repos, un niveau suffisant de ce lubrifiant pour garantir une lubrification convenable des engrenages en fonctionnement.

Pour ce faire, l'invention propose un dispositif de lubrification d'un train d'engrenages disposés dans une chambre d'un carter dont la partie inférieure forme réceptacle d'accumulation pour un lubrifiant du train d'engrenages dans lequel baigne normalement une partie inférieure d'un des engrenages, la chambre du carter présentant, au moins localement, autour dudit engrenage, une paroi à profil périphérique épousant sensiblement le contour périphérique de cet engrenage, à proximité de celui-ci, et comportant, à un niveau supérieur à celui de la partie inférieure formant réceptacle, un bec diviseur s'étendant vers l'intérieur de la chambre et vers la périphérie de l'engrenage et se raccordant à un conduit d'évacuation, formé dans le carter, caractérisé en ce que le conduit d'évacuation, débouche dans la chambre en avant du bec par rapport à la direction de rotation de l'engrenage, et communique extérieurement avec la partie supérieure d'un réservoir de lubrifiant, extérieur au carter, et communique, par sa base, via un conduit de retour externe, avec la partie inférieure de la chambre formant réceptacle.

Avec un tel agencement, lorsque le train d'engrenages est mis en marche, l'engrenage inférieur barbotant dans la réserve de lubrifiant dans la base de la chambre entraîne, dans sa rotation, une partie substantielle de ce lubrifiant vers les autres engrenages du train d'engrenages et vers la partie haute de la chambre du carter, le bec et le conduit d'évacuation déviant une partie de ce lubrifiant entraîné vers le réservoir d'où le lubrifiant, efficacement refroidi, peut regagner la partie inférieure formant réceptacle de la chambre.

La présente invention a pour objet de proposer un dispositif de lubrification du type défini ci-dessus de structure simple et modulaire, et de faibles coûts.

Pour ce faire, selon une autre caractéristique de l'invention, le réservoir est avantageusement rapporté de façon amovible sur le carter.

La présente invention a pour autre objet de proposer un agencement d'un tel réservoir pour dispositif de lubrification d'un train d'engrenages permettant de disposer d'une réserve plus importante de lubrifiant tout en maintenant le contrôle d'une quantité de lubrifiant minimum dans la chambre du carter et assurant un refroidissement optimum du lubrifiant recirculé vers la chambre du carter.

D'autres caractéristiques et avantages de la présente invention ressortiront de la description suivante d'un mode de réalisation, donné à titre illustratif mais nullement limitatif, faite en relation avec les dessins annexés, sur lesquels:

la fig. 1 est une vue schématique en coupe d'un premier mode de réalisation d'un dispositif de lubrification d'un train d'engrenages selon l'invention;

la fig. 2 est une vue partielle, en coupe transversale de la fig. 1, d'un train d'engrenages comportant un dispositif de lubrification selon l'invention; et

la fig. 3 est une vue identique à la fig. 1 montrant une vue schématique en coupe d'un second mode de réalisation du dispositif de lubrification incorporant un réservoir selon l'invention.

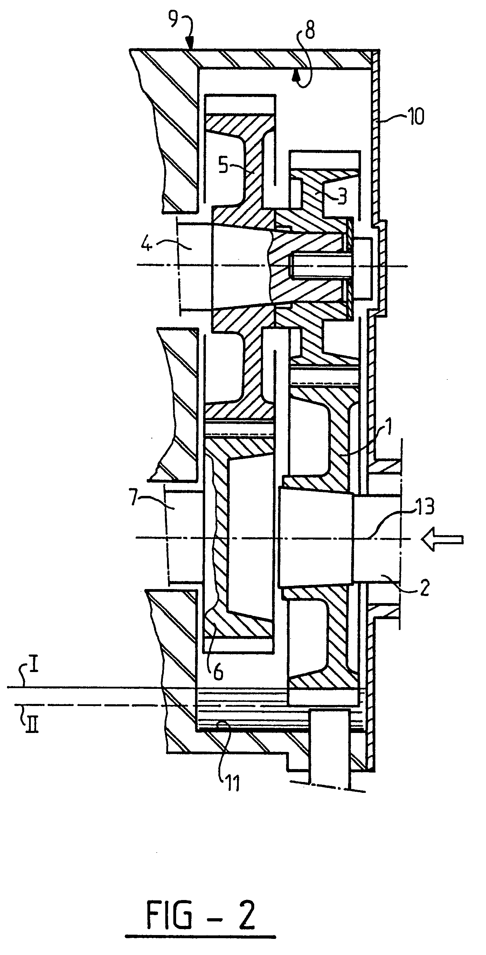

On a représenté, à titre d'exemple non limitatif, sur la fig. 2, un train d'engrenages multiplicateur comportant une roue dentée d'entrée 1 entraînée par un arbre moteur 2 et engrenant avec un pignon 3 monté sur un arbre 4 portant en outre une autre roue dentée 5 engrenant avec un pignon 6 solidaire d'un arbre 7 coaxial à l'arbre d'entrée 2 et parallèle à l'arbre 4. Les engrenages 1, 3, 5 et 6 sont disposés dans une chambre 8 d'un carter 9 fermée par un couvercle 10. Ce train d'engrenages est par exemple le train d'entraînment et de synchronisation d'une paire de rotors d'un compresseur à vis tel que décrit dans la demande de brevet européen EP-A-0 101 345, l'arbre 4 étant l'arbre du rotor femelle et l'arbre 7 l'arbre du rotor mâle, ce train multiplicateur permettant d'atteindre des vitesses de rotation des rotors supérieures à 12 000 tours par minute.

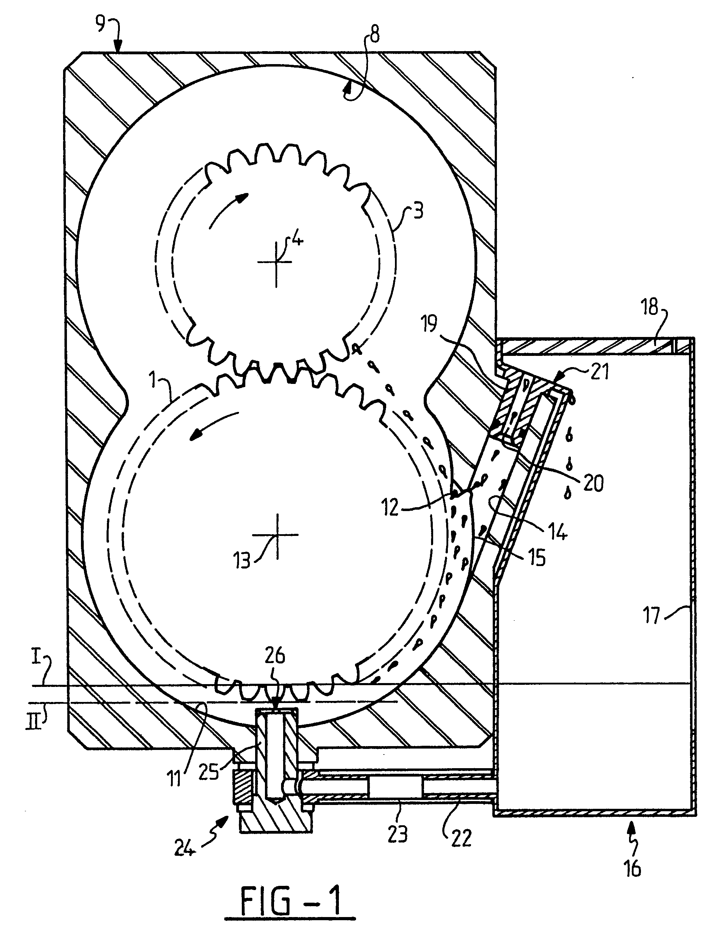

Comme on le voit mieux sur la fig. 1, la chambre 8, qui présente intérieurement l'allure générale d'un 8, a sa partie inférieure 11 présentant un profil périphérique intérieur épousant sensiblement le contour périphérique de la roue dentée 1, à proximité de celui-ci, sur la majeure partie de l'extension périphérique de cette roue dentée 1. La paroi de cette partie inférieure 11 de la chambre 8 comporte, dans sa partie montante, rapportée au sens de rotation normal de la roue dentée 1, un bec diviseur 12 faisant saillie dans la chambre 8 et s'étendant vers le bas dans la direction vers la périphérie de la roue dentée 1, le bec 12 étant situé à un niveau au-dessus de l'axe 13 de la roue dentée 1 et se raccordant continûment, par sa partie inférieure, avec un conduit d'évacuation 14 formé dans la paroi du carter 9 et débouchant intérieurement dans la partie inférieure 11 de la chambre 8 par une ouverture 15 ayant une extension en hauter sensiblement centrée sur le niveau de l'axe 13. Comme on le voit sur la fig. 1, le conduit d'évacuation 14 s'étend vers l'extérieur et vers le haut à partir de l'ouverture 15 suivant une direction générale sensiblement tangentiellement à la périphérie interne de la partie inférieure 11 de la chambre 8.

Selon un aspect de l'invention, le conduit d'évacuation 14 débouche extérieurement dans la partie supérieure d'un réservoir 16 monté extérieurement sur le carter 9 et réalisé par exemple en métal avec éventuellement une lumière latérale en matériau transparent 17, le réservoir étant fermé, à sa partie supérieure, par un couvercle 18. Dans l'extrémité supérieure du conduit d'évacuation 14 est monté de façon étanche un raccord tubulaire 19 comportant un passage intérieur traversant 20 de dimension transversale inférieure à celle du conduit 14 et formant donc, dans ce dernier, un étranglement collecteur. Le raccord 19, solidarisé au réservoir 16, se termine, dans ce dernier, par une surface inclinée 21. Le réservoir 16 comporte, à sa base, un embout 22 pour le raccordement, via un tube externe 23, à un raccordement coudé 24 monté dans la partie inférieure du carter 9 et comportant une partie tubulaire 25 traversant verticalement la paroi du carter 9 de façon à faire légèrement saillie dans la partie inférieure 11 de la chambre 8 par rapport au niveau le plus inférieur de cette dernière, et débouchant donc au voisinage immédiat de la partie périphérique la plus basse de la roue dentée 1. Selon un aspect de l'invention, le circuit de retour 22 - 23 - 25 comporte une restriction 26, de section de passage inférieure à celle de la restriction 20, avantageusement constituée par un diaphragme serti dans l'extrémité extérieure de la partie tubulaire 25.

Le fonctionnement du dispositif de lubrification est le suivant. Au repos, le niveau du lubrifiant dans la chambre 8 et dans le réservoir 16 est figuré par la ligne I, c'est-à-dire que la quantité de lubrifiant dans la base de la partie inférieure 11 de la chambre 8 baigne intégralement les dents de la partie inférieure de la roue dentée 1. En fonctionnement, lorsque la roue dentée 1 tourne, elle entraîne vers le haut, comme figuré par les gouttelettes, une bonne partie du lubrifiant initialement emmagasiné à la base de la partie inférieure 11 de la chambre 8. Le lubrifiant ainsi entraîné est amené jusqu'au niveau de l'ouverture 15 et du bec diviseur 12 de sorte que seule une partie du lubrifiant non adhérent à la roue dentée 1 atteint la partie haute de la chambre 8 pour la lubrification des engrenages 3, 5 puis 6, le reste du lubrifiant entraîné étant acheminé dynamiquement avec l'air également dévié dans le conduit d'évacuation 14 et la restriction 20 du raccord 19 qui ralentit les gouttelettes déviées, lesquelles s'accumulent, à la sortie de la restriction 20, sur le plan incliné 21 du raccord 19, d'où elles s'écoulement, par gravité, vers le fond du réservoir 16. Le niveau du lubrifiant dans la partie inférieure 11 de la chambre 8, lors du fonctionnement du train d'engrenages, est figuré par la ligne II sensiblement tangente aux extrémités des dents de la roue dentée 1. La restriction 26 permet d'éviter que, lorsque l'ensemble est sujet à des à-coups ou à des accélérations brutales, notamment lorsqu'il est monté dans un véhicule automobile, la quantité de lubrifiant demeurant dans le réservoir 16 ne se transfère brutalement dans la partie inférieure 11 de la chambre 8, en permettant de respecter ainsi sensiblement le niveau normal de fonctionnement II. Par ailleurs, les paliers des arbres 2, 4 et 7 des pignons du train d'engrenages sont également lubrifiés par les projections du lubrifiant et par l'émulsion créée dans le carter 9 lors de la rotation de la roue dentée 1.

De plus, la structure précédemment décrite permet d'assurer un refroidissement du lubrifiant, la section de passage de la restriction 26 étant adaptée du fait de la variation de viscosité en fonction de la température.

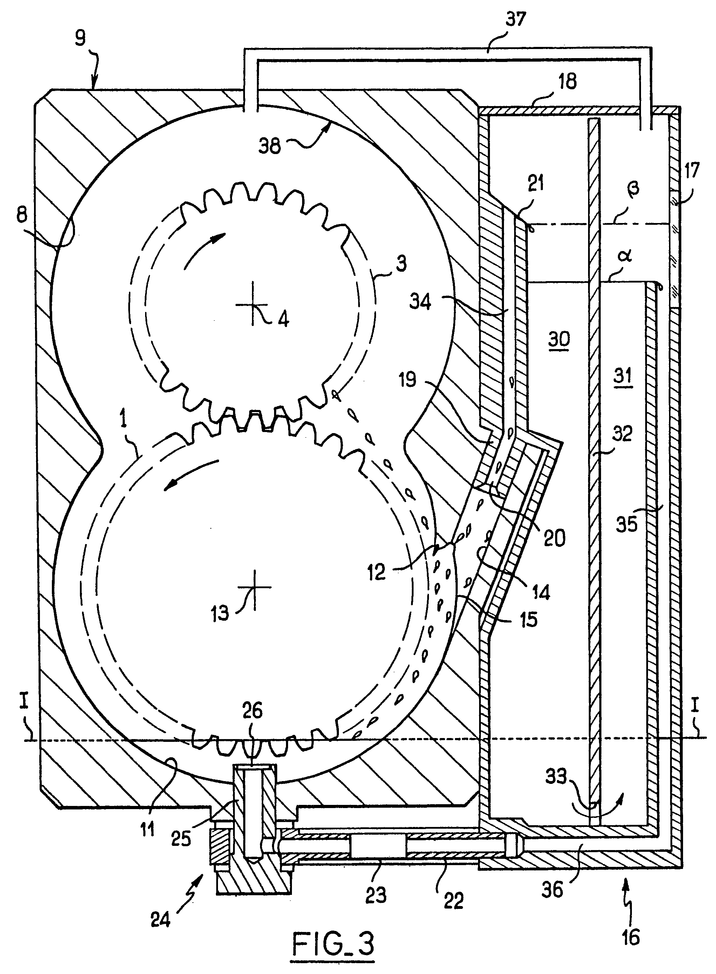

Dans le mode de réalisation représenté sur le Fig. 3, le réservoir 16 présente une configuration générale allongée en hauteur et comporte un volume d'accumulation, de configuration générale verticale, divisé en une première chambre 30 et une seconde chambre 31 juxtaposées et séparées par une cloison verticale 32 s'étendant sensiblement sur toute la hauteur du réservoir et comportant, à sa partie inférieure, un passage traversant 33 formant normalement la seule communication pour le lubrifiant entre les deux chambres 30 et 31. Le conduit d'évacuation 14 est prolongé, au delà de l'embout 19, par un passage 34, formé avantageusement dans la paroi en matériaui plastique résistant à la chaleur du réservoir 16 de façon é déboucher, par la surface inclinée 21, dans la partie supérieure de la première chambre adjacente 30. Dans la paroi opposée du réservoir 16 est ménagé un passage d'alimentation comportant un tronçon principal vertical 35 et un tronçon inférieur 36, formé dans le fond du réservoir 16 et auquel est raccordé l'embout 22 du conduit de retour. Le passage d'alimentation 35 débouche dans la partie supérieure de la seconde chambre 31 en un niveau inférieur au niveau où débouche le passage 34 dans la surface inclinée 21.

Pour la mise en œuvre du dispositif de lubrification, on remplit de lubrifiant le réservoir 16 d'une quantité de lubrifiant supérieure à celle remplissant normalement le volume d'accumulation 30, 31 (et figurée par la ligne de niveau $\alpha$). Ce volume de lubrifiant en excès, figuré sur la fig. 3 par le volume entre le plan du niveau $\alpha$ et le plan du niveau $\beta$, s'écoule par le passage d'alimentation 35, 36 dans la partie inférieure 11 de la chambre d'engrenages 8 jusqu'à atteindre le niveau normal au repos I, le lubrifiant dans les chambres 30 et 31 ayant un niveau affleurant le niveau $\alpha$. En fonctionnement, lorsque la roue dentée 1 tourne, elle entraîne vers le haut, comme figuré par les gouttelettes, une bonne partie du lubrifiant précédemment emmagasiné à la base de la partie inférieure 11 de la chambre 8, abaissant ainsi le niveau I jusqu'à un niveau affleurant juste la périphérie des dents de la roue dentée 1, comme décrit précédemment. L'huile évacuée par le conduit d'évacuation 14 dégoutte dans la première chambre 30, ce qui a tendance à ainsi faire déborder le lubrifiant à température ambiante occupant la chambre 31 et réapprovisionner ainsi le passage d'alimentation 35, 36 pour maintenir sensiblement constant le niveau bas dans la chambre d'engrenages 8 mais avec un apport de lubrifiant à température ambiante, le transit entre les chambres 30 et 31 s'effectuant, comme figuré par la flèche, par le passage d'intercommunication inférieur 33 et empêchant ainsi que l'huile chaude évacuée par le conduit d'évacuation 14 ne soit directement recyclée, via le passage d'alimentation 35, 36, dans la chambre 8.

La paroi extérieure du réservoir 16 est avantageusement pourvue d'une fenêtre en matériau transparent 17, également typiquement en matériau plastique, et l'on prévoit, également avantageusement, une conduite extérieure 37 d'égalisation de pression entre la partie supérieure de la seconde chambre 31 et la partie supérieure 38 de la chambre d'engrenages 8 pour éviter tout risque de dépressurisation de cette dernière.

## Revendications

1. Dispositif de lubrification d'un train d'engrenages (1, 3) disposés dans une chambre (8) d'un carter (9) dont la partie inférieure (11) forme réceptacle d'accumulation pour un lubrifiant du train d'engrenages dans lequel baigne normalement une partie inférieure d'un (1) des engrenages, la chambre (8) du carter présentant, au moins localement, autour dudit engrenage (1), une paroi à profil périphérique épousant sensiblement le contour périphérique de cet engrenage, à proximité de celui-ci, et comportant, à un niveau supérieur à celui de la partie inférieure formant réceptacle, un bec diviseur (12) s'étendant vers l'intérieur de la chambre (8) et vers la périphérie de l'engrenage (1) et se raccordant à un conduit d'évacuation (14), formé dans le carter, caractérisé en ce que le conduit d'évacuation (14), débouche (15) dans la chambre (8) en avant du bec (12) par rapport à la direction de rotation de l'engrenage (1), et communique extérieurement avec la partie supérieure d'un réservoir de lubrifiant (16), extérieur au carter (8), et communique, par sa base, via un conduit de retour externe (22, 23, 25), avec la partie inférieure de la chambre formant réceptacle (11).

2. Dispositif selon la revendication 1, caractérisé en ce que le bec (12) est situé à un niveau supérieur à celui de l'axe (13) de l'engrenage 61).

3. Dispositif selon la revendication 2, caractérisé en ce que le conduit d'évacuation (14) s'étend vers le haut, sensiblement tangentiellement à partir de la paroi de la chambre (8).

4. Dispositif selon la revendication 2 ou la revendication 3, caractérisé en ce que le conduit d'évacuation (14) comporte une restriction (20).

5. Dispositif selon l'une des revendications 1 à 4, caractérisé en ce que le conduit de retour (22, 23, 25) débouche dans la partie inférieure de la chambre (8) par une partie d'extrêmité (25) faisant saillie dans la chambre par rapport à la paroi de cette dernière.

6. Dispositif selon la revendication 5, caractérisé en ce que le conduit de retour (22, 23, 25) comporte une restriction (26).

7. Dispositif selon l'une quelconque des revendications précédentes, caractérisé en ce que le réservoir (16) est rapporté de façon amovible sur le carter (9).

8. Dispositif selon la revendication 4 et la revendication 7, caractérisé en ce que la restriction (20) est formé par un embout (19) solidaire du réservoir (16) et engagé dans le conduit d'évacuation (14).

9. Dispositif selon l'une des revendications 1 à 8, caractérisé en ce que le réservoir (16) comprend un volume d'accumulation de configuration générale verticale divisé, par une cloison (32), en une première chambre (30) et une seconde chambre (31) communiquant l'une avec l'autre par un passage (33) formé dans la partie inférieure de la cloison (32), le conduit d'évacuation (14, 34) débouchant, en un premier niveau, dans la partie supérieure de la première chambre (30), et un passage d'alimentation (35, 36), communiquant par le bas (22, 23, 25) avec la partie inférieure (11) de la chambre à engrenages (8) du carter (9), et débouchant, en un second niveau ($\alpha$), dans la partie supérieure de la deuxième chambre (31).

10. Dispositif selon la revendication 9, caractérisé en ce que le second niveau ($\alpha$) est inférieur au premier niveau.

11. Dispositif selon la revendication 9 ou la revendication 10, caractérisé en ce qu'il comporte une conduite (37) reliant la partie supérieure de la seconde chambre (31) du réservoir (16) et la partie supérieure (38) de la chambre à engrenages (8) du carter (9).

12. Dispositif selon l'une des revendications 9 à 11, caractérisé en ce que le réservoir (16) est realisé en un matériau plastique.

## Patentansprüche

1. Vorrichtung zum Schmieren eines Satzes von Zahnrädern (1, 3), die in einer Kammer (8) eines Gehäuses (9) angeordnet sind, dessen unter Abschnitt (11) einen Sammelbehälter für ein Schmiermittel des Zahnrädersatzes bildet, in welchem normalerweise ein unterer Abschnitt eines (1) der Zahnräder badet, wobei die Kammer (8) des Gehäuses zumindest örtlich um dieses Zahnrad (1) herum eine Wand mit einem Umfangsprofil aufweist, das im wesentlichen der Umfangskontur dieses Zahnrades (88) in dessen Nähe entspricht, und auf einem höheren Niveau als dem des den Behälter bildenden unteren Abschnittes eine Teilernase (12) aufweist, die sich ins Innere der Kammer (8) zum Umfang des Zahnrades (1) erstreckt und sich an eine im Gehäuse gebildete Entlüftungsleitung (14) anschliesst, dadurch gekennzeichnet, dass die Entlüftungsleitung (14) in der Kammer (8) stromauf der Nase (12) bezüglich der Drehrichtung des Zahnrades (1) mündet und aussen mit dem oberen Abschnitt eines Schmiermittelreservoirs (16) ausserhalb des Gehäuses (8) in Verbindung steht und an seiner Unterseite über eine externe Rückführleitung (22, 23, 25) mit dem den Behälter bildenden unteren Abschnitt (11) der Kammer verbunden ist.

2. Vorrichtung nach Anspruch 1, dadurch gekennzeichnet, dass die Nase (12) auf einem höheren Niveau als die Achse (13) des Zahnrades liegt.

3. Vorrichtung nach Anspruch 2, dadurch gekennzeichnet, dass sich die Entlüftungsleitung (14) nach oben, im wesentlichen tangential ausgehend von der Wand der Kammer 68) erstreckt.

4. Vorrichtung nach Anspruch 2 oder 3, dadurch gekennzeichnet, dass die Entlüftungsleitung (14) eine Drosselstelle (20) aufweist.

5. Vorrichtung nach einem der Ansprüche 1-4, dadurch gekennzeichnet, dass die Rückführleitung (22, 23, 25) im unteren Abschnitt der Kammer (8) mit einem Endabschnitt (25) mündet, der in die Kammer bezüglich der Wand der Kammer vorsteht.

6. Vorrichtung nach Anspruch 5, dadurch gekennzeichnet, dass die Rückführleitung (22, 23, 25) eine Drosselstelle (26) aufweist.

7. Vorrichtung nach einem der vorhergehenden Ansprüche, dadurch gekennzeichnet, dass das Reservoir (16) lösbar am Gehäuse (9) angebracht ist.

8. Vorrichtung nach den Ansprüchen 4 und 7, dadurch gekennzeichnet, dass die Drosselstelle (20) von einem Ansatzstück (19) gebildet wird, dass mit dem Reservoir (16) fest verbunden ist und in der Entlüftungsleitung (14) sitzt.

9. Vorrichtung nach einem der Ansprüche 1-8, dadurch gekennzeichnet, dass das Reservoir (16) ein Sammelvolumen von ungefähr vertikaler Ausrichtung aufweist, das durch eine Trennwand (32) in eine erste Kammer (30) und eine zweite Kammer (31) unterteilt ist, die miteinander über einen im unteren Abschnitt der Trennwand (32) gebildeten Kanal (33) miteinander in Verbindung stehen, wobei die Entlüftungsleitung (14, 34) auf einem ersten Niveau in dem oberen Abschnitt der ersten Kammer (30) mündet und ein Zufuhrkanal (35, 36) an der Unterseite (22, 23, 25) mit dem unteren Abschnitt (11) der Zahnräderkammer (8) des Gehäuses (9) verbunden ist und auf einem zweiten Niveau (α) in dem oberen Abschnitt der zweiten Kammer (31) mündet.

10. Vorrichtung nach Anspruch 9, dadurch gekennzeichnet, dass das zweite Niveau (α) niedriger ist als das erste Niveau.

11. Vorrichtung nach Anspruch 9 oder 10, dadurch gekennzeichnet, dass sie eine Leitung (37) aufweist, die den oberen Abschnitt der zweiten Kammer (31) des Reservoirs (16) und den oberen Abschnitt (38) der Zahnräderkammer (8) des Gehäuses (9) verbindet.

12. Vorrichtung nach einem der Ansprüche 9-11, dadurch gekennzeichnet, dass das Reservoir (16) aus einem Kunststoff besteht.

**Claims**

1. Device for lubricating a train of gears (1, 3) arranged in a chamber (8) of a housing (9), the lower part (11) of which forms an accumulation receptacle for a lubricant of the gear train, in which a lower part of one (1) of the gears is normally immersed, the chamber (8) of the housing having, at least locally, round the said gear (1) a wall with a peripheral profile substantially matching the peripheral contour of this gear in the vicinity of the latter and possessing, at a level higher than that of the lower part forming a receptacle, a dividing nose (12) extending towards the interior of the chamber (8) and towards the periphery of the gear (1) and being connected to a discharge conduit (14) made in the housing, characterized in that the discharge conduit (14) opens (15) into the chamber (8) in front of the nose (12) in relation to the direction of rotation of the gear (1) and, on the outside, communicates with the upper part of a lubricant reservoir (16) external to the housing (8) and, by means of its base, communicates, via an outer return conduit (22, 23, 25), with the lower part of the chamber forming a receptacle (11).

2. Device according to claim 1, characterized in that the nose (12) is located at a level higher than that of the axis (13) of the gear (1).

3. Device according to claim 2, characterized in that the discharge conduit (14) extends upwards substantially tangentially from the wall of the chamber (8).

4. Device according to claim 2 or claim 3, characterized in that the discharge conduit (14) has a restriction (20).

5. Device according to one of claims 1 to 4, characterized in that the return conduit (22, 23, 25) opens into the lower part of the chamber (8) via an end part (25) projecting into the chamber relative to the wall of the latter.

6. Device according to claim 5, characterized in that the return conduit (22, 23, 25) has a restriction (26).

7. Device according to any one of the preceding claims, characterized in that the reservoir (16) is attached removably to the housing (9).

8. Device according to claim 4 and claim 7, characterized in that the restriction (20) is formed by a nipple (19) integral with the reservoir (16) and engaged into the discharge conduit (14).

9. Device according to one of claims 1 to 8, characterized in that the reservoir (16) comprises an accumulation volume of general vertical shape divided, by means of a partition (32), into a first chamber (30) and a second chamber (31) communicating with one another via a passage (33) formed in the lower part of the partition (32), the discharge conduit (14, 34) opening, at a first level, into the upper part of the first chamber (30) and a feed passage (35, 36) communicating via the bottom (22, 23, 25) with the lower part (11) of the gear chamber (8) of the housing (9) and opening, at a second level (α), into the upper part of the second chamber (31).

10. Device according to claim 9, characterized in that the second level (α) is lower than the first level.

11. Device according to claim 9 or claim 10, characterized in that it possesses a pipe (37) connecting the upper part of the second chamber (31) of the reservoir (16) and the upper part (38) of the gear chamber (8) of the housing (9).

12. Device according to one of claims 9 to 11, characterized in that the reservoir (16) is made of a plastic.

5

FIG -1

FIG – 2

FIG_3